# FASCICULE DE BREVET EUROPEEN

(11) **EP 2 923 129 B1**
(45) Date de publication et mention de la délivrance du brevet: **27.12.2017**
(21) Numéro de dépôt: 13803150.5
(22) Date de dépôt: 18.11.2013
(51) Int. Cl.: F16B 7/04, F16L 21/00, F16L 37/10

(54) **SYSTEME DE VERROUILLAGE D'UN RACCORDEMENT D'ELEMENTS A EMBOUTS MALE ET FEMELLE**
SYSTEM ZUR ARRETIERUNG EINER KUPPLUNG VON ELEMENTEN MIT STECKER- UND BUCHSENENDEN
SYSTEM FOR LOCKING A COUPLING OF ELEMENTS, HAVING MALE AND FEMALE ENDS

(30) Priorité: 22.11.2012 FR 1261145
(43) Date de publication de la demande: 30.09.2015
(73) Titulaire: Collin, 92220 Bagneux (FR); Sadowski, Boguslaw, 93340 Le Raincy (FR)
(72) Inventeur: SADOWSKI, Boguslaw, F-93340 Le Raincy (FR); MIROIR, Mathieu, F-35170 Bruz (FR)
(74) Mandataire: Bonnet, Michel
(86) Numéro de dépôt international: PCT/FR2013/052769
(87) Numéro de publication internationale: WO 2014/080113

(56) Documents cités:
- FR-A1- 2 786 847
- GB-A- 2 021 722
- US-A- 3 480 310

## Description

La présente invention concerne un système de verrouillage comportant un embout cylindrique mâle d'un premier élément et un embout cylindrique tubulaire femelle d'un deuxième élément, l'embout cylindrique mâle étant destiné à être engagé à l'intérieur de l'embout cylindrique tubulaire femelle pour raccorder le premier élément au deuxième élément.

De nombreux systèmes de verrouillage existent pour raccorder et verrouiller deux éléments mécaniques tels qu'un outil et un porte-outil, l'outil et son porte-outil étant à embouts cylindriques mâle (en général pour l'outil) et femelle (en général pour le porte-outil) correspondants. L'outil peut être par exemple un outil coupant ou tranchant, un tournevis, une clé de mécanique, un foret, un taraud, etc. Le système de verrouillage employé est alors par exemple à mandrin, vis de serrage, pince, utilisant un système de serrage avec ou sans ressort de rappel. Il présente généralement une certaine complexité, notamment en termes d'ergonomie et d'usage, nécessitant les deux mains d'un utilisateur et parfois l'usage de tournevis ou de clés de verrouillage spécifiques.

De nombreux systèmes de verrouillage existent également pour raccorder et verrouiller deux éléments mécaniques tels que des câbles coaxiaux ou conduits dont les embouts sont également de formes mâle et femelle correspondantes. Ils présentent eux aussi généralement une certaine complexité et doivent assurer en outre une bonne étanchéité (conduits de transmission fluidique) ou une bonne connexion (câbles électriques). Ces contraintes d'étanchéité et de connexion peuvent également s'appliquer à certains outils de précision, dans le domaine médical par exemple. Elles participent à la complexité du verrouillage.

Il est souhaitable malgré tout, notamment dans des applications de précision, de simplifier l'ergonomie du verrouillage. L'invention s'applique ainsi plus particulièrement à un système de verrouillage du type précité, dans lequel :
- une gorge de verrouillage est creusée dans la face externe de l'embout cylindrique mâle,
- l'embout cylindrique tubulaire femelle est percé latéralement d'un orifice traversant à l'intérieur duquel est disposé un élément mobile de verrouillage apte à faire saillie à l'intérieur de l'embout cylindrique tubulaire femelle dans la gorge de verrouillage de l'embout cylindrique mâle, et
- une bague de verrouillage est montée sur la face externe de l'embout cylindrique tubulaire femelle en regard de l'orifice traversant, cette bague présentant une face interne dans laquelle un évidement de profondeur variable permet le blocage/déblocage de l'élément mobile de verrouillage contre la gorge de verrouillage en fonction de la position de la bague.

Un tel système de verrouillage est par exemple décrit dans le brevet français publié sous le numéro FR 2 707 432 B1. Dans ce document, une gorge de verrouillage annulaire est creusée dans la face externe de l'embout cylindrique mâle. L'élément mobile de verrouillage est une bille et, selon la position axiale de la bague de verrouillage le long de l'embout cylindrique tubulaire femelle, la face interne de la bague de verrouillage étant elle-même également munie d'une ou plusieurs gorges annulaires, la bille est comprimée et bloquée contre la gorge de verrouillage annulaire ou débloquée. Plus précisément, la bille est bloquée contre la gorge de verrouillage de l'embout cylindrique mâle lorsque celle-ci est disposée en regard de l'orifice traversant et lorsque la bille n'est pas en regard de l'une des gorges annulaires de l'embout cylindrique tubulaire femelle ; au contraire, la bille est débloquée avec un certain degré de liberté lorsqu'elle est en regard de l'une des gorges annulaires de l'embout cylindrique tubulaire femelle.

L'ergonomie de ce système de verrouillage est améliorée par rapport aux autres systèmes existants, mais le système reste complexe, notamment parce qu'il nécessite de prévoir des moyens de rappel et aussi parce que certaines actions de verrouillage ou déverrouillage, selon le mode de réalisation choisi, peuvent nécessiter des mouvements axiaux de sens contraires à réaliser en même temps dans lesquels les deux mains d'un utilisateur doivent alors être sollicitées.

Les documents US 3480310 A et GB 2021722 A divulguent tous deux un système de verrouillage selon le préambule de la revendication 1. US 3480310 A montre de plus d'étroites stries formées sur l'embout cylindrique mâle.

Il peut ainsi être souhaité de prévoir un système de verrouillage qui permette de s'affranchir d'au moins une partie des problèmes et contraintes précités.

Il est donc proposé un système de verrouillage comportant un embout cylindrique mâle d'un premier élément et un embout cylindrique tubulaire femelle d'un deuxième élément, l'embout cylindrique mâle étant destiné à être engagé à l'intérieur de l'embout cylindrique tubulaire femelle pour raccorder le premier élément au deuxième élément, dans lequel :
- une gorge de verrouillage est creusée dans la face externe de l'embout cylindrique mâle,
- l'embout cylindrique tubulaire femelle est percé latéralement d'un orifice traversant à l'intérieur duquel est disposé un élément mobile de verrouillage apte à faire saillie à l'intérieur de l'embout cylindrique tubulaire femelle dans la gorge de verrouillage de l'embout cylindrique mâle, et
- une bague de verrouillage est montée sur la face externe de l'embout cylindrique tubulaire femelle en regard de l'orifice traversant, cette bague présentant une face interne dans laquelle un évidement de profondeur variable permet le blocage/déblocage de l'élément mobile de verrouillage contre la gorge de verrouillage en fonction de la position de la bague,
et dans lequel la bague de verrouillage est montée libre en rotation autour de l'embout cylindrique tubulaire femelle et en ce que la variabilité de profondeur de l'évidemment permettant le blocage/déblocage de l'élément mobile de verrouillage est orthoradiale. De plus, dans le système de verrouillage selon l'invention, la gorge de verrouillage s'étend dans la direction axiale de l'embout cylindrique mâle depuis une extrémité libre de celui-ci, pour accompagner et contraindre angulairement l'engagement de l'embout cylindrique mâle dans l'embout cylindrique tubulaire femelle, et l'évidement présente une profondeur maximale telle que, lorsque cette profondeur maximale est disposée en regard de l'orifice traversant, l'élément mobile de verrouillage fait malgré tout saillie à l'intérieur de l'embout cylindrique tubulaire femelle de manière à coopérer avec la gorge de verrouillage pour exercer l'action d'accompagner et contraindre angulairement l'engagement de l'embout cylindrique mâle dans l'embout cylindrique tubulaire femelle.

Ainsi, grâce à l'invention, c'est par un mouvement de rotation orthoradiale bloquant et débloquant l'élément mobile de verrouillage que la bague permet le verrouillage et le déverrouillage du raccordement guidé angulairement. Ce mouvement de rotation étant aisément réalisable à l'aide de deux doigts d'une même main, le pouce et l'index, elle-même pouvant maintenir l'embout cylindrique tubulaire femelle à l'aide des autres doigts, l'action de verrouillage ou de déverrouillage est simplifiée, de même que l'action préalable d'engagement de l'embout cylindrique mâle dans l'embout cylindrique tubulaire femelle.

De façon optionnelle, l'évidement de profondeur variable en face interne de la bague de verrouillage est creusé dans un secteur angulaire orthoradial, entre une première extrémité angulaire de profondeur maximale et une seconde extrémité angulaire de profondeur minimale, la profondeur diminuant progressivement de ladite première extrémité angulaire à ladite seconde extrémité angulaire.

De façon optionnelle également, la gorge de verrouillage présente, à son extrémité située à l'opposé de l'extrémité libre de l'embout cylindrique mâle, une cavité de plus grande profondeur creusée également dans la face externe de l'embout cylindrique mâle.

De façon optionnelle également, l'élément mobile de verrouillage est une bille.

De façon optionnelle également, l'orifice traversant présente une réduction de diamètre, du côté de la face interne de l'embout cylindrique tubulaire femelle, limitant la saillie de l'élément mobile de verrouillage à l'intérieur de l'embout cylindrique tubulaire femelle.

De façon optionnelle également, un système de verrouillage selon l'invention peut comporter un embout cylindrique tubulaire femelle supplémentaire du deuxième élément et un embout cylindrique mâle supplémentaire d'un troisième élément, le deuxième élément formant ainsi une pièce intermédiaire de raccordement du premier élément au troisième élément, le système de verrouillage présentant alors en outre les caractéristiques suivantes :
- une gorge de verrouillage supplémentaire est creusée dans la face externe de l'embout cylindrique mâle supplémentaire du troisième élément,
- l'embout cylindrique tubulaire femelle supplémentaire est percé latéralement d'un orifice traversant supplémentaire à l'intérieur duquel est disposé un élément mobile de verrouillage supplémentaire apte à faire saillie à l'intérieur de l'embout cylindrique tubulaire femelle supplémentaire dans la gorge de verrouillage supplémentaire, et
- une bague de verrouillage supplémentaire est montée libre en rotation autour de l'embout cylindrique tubulaire femelle supplémentaire en regard de l'orifice traversant supplémentaire, cette bague de verrouillage supplémentaire présentant une face interne dans laquelle un évidement de profondeur variable orthoradialement permet le blocage/déblocage de l'élément mobile de verrouillage supplémentaire contre la gorge de verrouillage supplémentaire en fonction de la position angulaire de la bague de verrouillage supplémentaire autour de son axe de rotation.

De façon optionnelle également, la gorge de verrouillage supplémentaire comporte au moins un segment s'étendant dans la direction axiale de l'embout cylindrique mâle supplémentaire depuis une extrémité libre de celui-ci, pour accompagner et contraindre angulairement l'engagement de l'embout cylindrique mâle supplémentaire dans l'embout cylindrique tubulaire femelle supplémentaire, jusqu'à une position de rétractation complète du deuxième élément dans le troisième élément dans laquelle l'embout cylindrique tubulaire femelle du deuxième élément ne dépasse pas de l'extrémité libre de l'embout cylindrique mâle supplémentaire du troisième élément.

De façon optionnelle également, la gorge de verrouillage supplémentaire comporte :
- un premier segment s'étendant dans la direction axiale de l'embout cylindrique mâle supplémentaire depuis une extrémité libre de celui-ci, destiné à prolonger la gorge de verrouillage de l'embout cylindrique mâle du premier élément,
- un deuxième segment parallèle au premier, s'étendant axialement depuis l'extrémité libre de l'embout cylindrique mâle supplémentaire sur une longueur supérieure à celle du premier segment,
- un troisième segment, partiellement annulaire et orthogonal aux deux premiers, reliant entre elles, d'une part, l'extrémité du premier segment qui est opposée à l'extrémité libre de l'embout cylindrique mâle supplémentaire et, d'autre part, une portion médiane du deuxième segment,
- un quatrième segment, partiellement annulaire, parallèle au troisième segment et de même longueur que celui-ci, une extrémité de ce quatrième segment communiquant avec l'extrémité du deuxième segment qui est opposée à l'extrémité libre de l'embout cylindrique mâle supplémentaire, et
- un cinquième segment parallèle aux deux premiers, s'étendant sur une certaine longueur depuis l'extrémité du quatrième segment qui est opposée à celle communicant avec le deuxième segment vers le premier segment et dans le prolongement de celui-ci ; et
la distance entre les troisième et quatrième segments est égale à la distance entre l'orifice traversant et l'orifice traversant supplémentaire.

De façon optionnelle également, le cinquième segment présente, à son extrémité située à l'opposé de celle communiquant avec le quatrième segment, une cavité de plus grande profondeur creusée dans la face externe de l'embout cylindrique mâle supplémentaire, et la longueur du cinquième segment est égale à la somme de la longueur du premier segment et de la longueur de la gorge de verrouillage de l'embout cylindrique mâle du premier élément.

L'invention sera mieux comprise à l'aide de la description qui va suivre, donnée uniquement à titre d'exemple et faite en se référant aux dessins annexés dans lesquels :
- la figure 1 est une vue en coupe longitudinale d'un système de verrouillage selon un mode de réalisation de l'invention,
- la figure 2 est une vue en coupe radiale, selon un plan AA' indiqué en figure 1, du système de verrouillage de la figure 1,
- la figure 3 est une vue en perspective éclatée d'un ensemble mécanique présentant un système de verrouillage selon un autre mode de réalisation de l'invention.

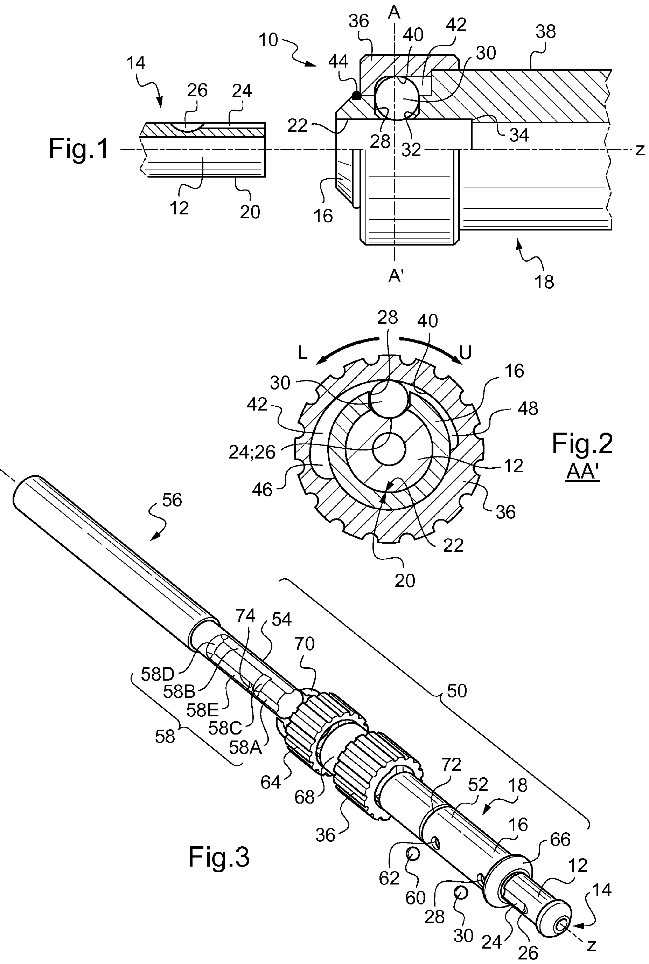

L'ensemble mécanique illustré sur la figure 1 présente un système de verrouillage 10 comportant un embout cylindrique mâle 12 d'un premier élément mécanique 14 et un embout cylindrique tubulaire femelle 16 d'un deuxième élément mécanique 18, l'embout cylindrique mâle 12 étant destiné à être engagé à l'intérieur de l'embout cylindrique tubulaire femelle 16 pour raccorder le premier élément mécanique 14 au deuxième élément mécanique 18.

L'embout cylindrique femelle 16 est nécessairement creux, donc tubulaire, pour recevoir l'embout cylindrique mâle 12, mais d'une façon plus générale, les premier et deuxième éléments mécaniques 14, 18 peuvent être eux-mêmes creux sur toute leur longueur de manière à permettre l'écoulement d'un fluide tel que de l'eau ou autre. De multiples applications peuvent ainsi être envisagées pour l'ensemble mécanique, celui-ci pouvant comporter un outil et son porte-outil, avec ou sans transmission de fluide du porte-outil vers l'outil, deux conduits ou câbles raccordés entre eux, etc.

Les deux embouts cylindriques 12 et 16 sont disposés coaxialement sur la figure 1 le long d'un axe z représentant l'axe central commun de leurs deux formes cylindriques. Ils sont éloignés l'un de l'autre mais en position de raccordement par simple translation de l'un vers l'autre le long de l'axe z, le diamètre de la face externe 20 de l'embout cylindrique mâle 12 correspondant à celui de la face interne 22 de l'embout cylindrique tubulaire femelle 16.

L'embout cylindrique mâle 12 présente une gorge de verrouillage 24 creusée dans sa face externe 20 parallèlement à l'axe z et sur une portion de sa longueur à partir de son extrémité libre. Cette gorge de verrouillage 24 est par exemple de section semi-circulaire et son extrémité située à l'opposé de l'extrémité libre de l'embout cylindrique mâle 12 présente une cavité 26 partiellement sphérique de plus grande profondeur creusée également dans la face externe 20.

L'embout cylindrique tubulaire femelle 16 est percé latéralement d'un orifice traversant 28 à l'intérieur duquel est disposé un élément mobile de verrouillage 30 apte à faire saillie à l'intérieur de l'embout cylindrique tubulaire femelle 16 dans la gorge de verrouillage 24 de l'embout cylindrique mâle 12 lorsque ce dernier est engagé dans l'embout cylindrique tubulaire femelle 16 selon un angle orthoradial approprié. La forme de l'élément mobile de verrouillage 30 est relativement libre, pouvant notamment être oblongue, mais elle est avantageusement sphérique formant ainsi une bille apte à glisser ou rouler le long de l'axe principal de l'orifice traversant 28. Ce dernier est principalement cylindrique, mais son extrémité débouchant dans la face interne 22 de l'embout cylindrique tubulaire femelle 16 présente un rétrécissement de diamètre matérialisé par une portion tronconique 32. Avantageusement, le diamètre de la bille de verrouillage 30 correspond au diamètre le plus grand de l'orifice traversant 28, de sorte que la portion tronconique 32 limite la saillie de la bille de verrouillage 30 à l'intérieur de l'embout cylindrique tubulaire femelle 16 en l'empêchant de sortir complètement de l'orifice traversant 28. Le profil de l'orifice traversant 28, cylindrique puis tronconique avec rétrécissement de diamètre en extrémité interne, est obtenu de façon très simple par un perçage incomplet débouchant dans la face interne 22.

La face interne 22 de l'embout cylindrique tubulaire femelle 16 peut optionnellement comporter un épaulement 34 formé par un rétrécissement de son diamètre. Cet épaulement 34 limite l'engagement de l'embout cylindrique mâle 12. De façon avantageuse, lorsque l'extrémité libre de celui-ci bute contre l'épaulement 34, la cavité 26 se trouve en regard de l'orifice traversant 28, prête à accueillir la bille de verrouillage 30. Ainsi, de préférence, la cavité 26 est d'une forme partiellement sphérique correspondant à la forme sphérique de la bille de verrouillage 30. En l'absence d'épaulement 34, la cavité 26 peut aussi remplir à elle seule la fonction de butée, parce qu'elle est située en fin de course de la bille de verrouillage 30 le long de la gorge de verrouillage 24.

Une bague de verrouillage 36 est montée sur la face externe 38 de l'embout cylindrique tubulaire femelle 16 en regard de l'orifice traversant 28. Cette bague de verrouillage 36 présente une face interne 40 dans laquelle un évidement 42 de profondeur variable permet le blocage/déblocage de la bille de verrouillage 30 contre la gorge de verrouillage 24, plus précisément contre la cavité 26 lorsque l'embout cylindrique mâle 12 est complètement engagé dans l'embout cylindrique tubulaire femelle 16, en fonction de la position de la bague de verrouillage 36.

La bague de verrouillage 36 est montée libre en rotation autour de l'embout cylindrique tubulaire femelle 16, mais toute translation le long de l'axe z est empêchée. Ce blocage en translation peut être réalisé de multiples façons connues en soi. Dans le mode de réalisation concrètement illustré par la figure 1 mais non limitatif, il est par exemple réalisé, d'une part par la présence de deux épaulements, l'un sur la face externe 38 de l'embout cylindrique tubulaire femelle 16 et l'autre sur la face interne 40 de la bague de verrouillage 36, venant buter l'un contre l'autre d'un côté de la bague, et d'autre part par la présence d'un anneau élastique ou circlips 44 monté dans une gorge annulaire creusée à proximité de l'extrémité libre de l'embout cylindrique tubulaire femelle 16, dans sa face externe 38, de l'autre côté de la bague de verrouillage 36.

L'évidement 42 est usiné dans la face interne 40 de la bague de verrouillage de manière à présenter une variabilité de profondeur orthoradiale par rapport à l'axe de référence z. Ainsi, selon la position angulaire orthoradiale de la bague de verrouillage 36 autour de l'embout cylindrique tubulaire femelle 16, la bille de verrouillage 30 est plus ou moins contrainte vers l'intérieur en saillie de la face interne 22, en fonction de la profondeur de l'évidement 42 dans sa portion angulaire disposée en regard de l'orifice traversant 28. Dans une première position de déblocage complet dans laquelle la profondeur de l'évidement en regard de l'orifice traversant 28 est maximale, la bille de verrouillage 30 conserve un certain degré de liberté dans l'orifice traversant 28 et n'exerce aucune pression contre la gorge de verrouillage 24 ou contre la cavité 26 lorsque l'embout cylindrique mâle 12 est complètement engagé. Dans cette première position, la bille de verrouillage peut malgré tout faire légèrement saillie à travers la face interne 22 de l'embout cylindrique tubulaire femelle 16 de manière à guider angulairement l'engagement en translation de l'embout cylindrique mâle 12 le long de l'axe z grâce à la direction principale axiale de la gorge de verrouillage 24. Dans une seconde position de blocage complet dans laquelle la profondeur de l'évidement en regard de l'orifice traversant 28 est minimale, la bille de verrouillage 30 est contrainte vers l'intérieur de l'embout cylindrique tubulaire femelle 16 et exerce une pression maximale contre la gorge de verrouillage 24 ou contre la cavité 26 lorsque l'embout cylindrique mâle 12 est complètement engagé, verrouillant ainsi le raccordement de l'embout cylindrique mâle 12 à l'embout cylindrique tubulaire femelle 16. Entre ces première et seconde positions, toutes les postions à saillies intermédiaires de la bille de verrouillage 36 sont par exemple possibles en fonction des variations orthoradiales de profondeur de l'évidement 42.

Ainsi, lorsque l'on engage l'élément mécanique 14 dans l'élément mécanique 18 le long de l'axe z, la bague de verrouillage 36 restant dans sa position de déblocage, la gorge de verrouillage 24 sert de guide angulaire en coopérant avec la bille de verrouillage 30 légèrement en saillie. En fin de course, la bille de verrouillage 30 se trouve en regard de la cavité 26 et une simple rotation de la bague de verrouillage 36 vers sa position de blocage à l'aide de deux doigts permet de verrouiller le raccordement.

La gorge de verrouillage 24 est présentée comme s'étendant axialement le long de l'embout cylindrique mâle 12, mais en variante, elle pourrait être de forme annulaire autour de l'embout cylindrique mâle 12, à une distance telle de son extrémité libre qu'elle soit en regard de l'orifice traversant 28 lorsque l'embout cylindrique mâle 12 est complètement engagé. Cette variante de réalisation est compatible avec une application où l'engagement de l'embout cylindrique mâle 12 dans l'embout cylindrique tubulaire femelle 16 n'a pas besoin d'être guidé angulairement.

Comme illustré sur la figure 2 en coupe radiale selon le plan AA' indiqué sur la figure 1, l'évidement 42 est par exemple creusé dans un secteur angulaire orthoradial limité autour de l'axe z. A une première extrémité angulaire 46, il présente une profondeur maximale qui va en diminuant jusqu'à une seconde extrémité angulaire 48 dans laquelle il présente une profondeur minimale. Pour des questions de facilité d'usinage et de complémentarité de forme avec la bille de verrouillage 30, les deux extrémités angulaires de l'évidement 42 peuvent être arrondies. Par rotation de la bague de verrouillage 36 autour de l'axe z dans un premier sens U (pour « Unlock »), la première extrémité angulaire 46 est amenée en regard de l'orifice traversant 28 et donc de la bille de verrouillage 30 pour obtenir la première position de déblocage précitée dans laquelle le raccordement des deux éléments mécaniques 14 et 18 est déverrouillé. Par rotation de la bague de verrouillage 36 autour de l'axe z dans un second sens opposé L (pour « Lock »), la seconde extrémité angulaire 48 est amenée en regard de l'orifice traversant 28 et donc de la bille de verrouillage 30 pour obtenir la seconde position de blocage précitée dans laquelle le raccordement des deux éléments mécaniques 14 et 18 est verrouillé. Le système est représenté dans une position intermédiaire sur la figure 2.

Par ailleurs, pour faciliter la préhension de la bague de verrouillage 36 à l'aide de deux doigts d'une même main et son engagement en rotation autour de l'axe z dans le sens U ou L, des gorges parallèles à l'axe z peuvent être aménagées et réparties sur toute la périphérie de la bague de verrouillage 36. En variante (non illustrée), la surface externe de la bague de verrouillage 36 peut être gravée par moletage pour être rendue antidérapante.

L'ensemble mécanique illustré sur la figure 3 présente un système de verrouillage 50 conforme à un mode de réalisation différent de celui illustré sur les figures 1 et 2. Ce mode de réalisation est plus complexe mais avantageux pour certaines applications relatives à l'instrumentation de précision où un outil doit pouvoir être raccordé ou désolidarisé avec minutie de son porte-outil.

Selon cet autre mode de réalisation, l'ensemble mécanique 50 comporte, comme dans le précédent mode de réalisation, un embout cylindrique mâle 12 d'un premier élément mécanique 14, ce dernier étant par exemple un outil de précision (partiellement représenté sur la figure 3). Il comporte en outre, comme dans le précédent mode de réalisation, un embout cylindrique tubulaire femelle 16 d'un deuxième élément mécanique 18, l'embout cylindrique mâle 12 étant destiné à être engagé à l'intérieur de l'embout cylindrique tubulaire femelle 16 pour raccorder le premier élément mécanique 14 au deuxième élément mécanique 18, ce dernier étant une pièce intermédiaire tubulaire de raccordement.

En supplément du mode de réalisation précédent, l'ensemble mécanique 50 comporte un embout cylindrique tubulaire femelle supplémentaire 52 de la pièce intermédiaire tubulaire de raccordement 18 et un embout cylindrique mâle supplémentaire 54 d'un troisième élément mécanique 56, ce dernier étant par exemple un porte-outil (partiellement représenté sur la figure 3). L'embout cylindrique mâle supplémentaire 54 est destiné à être engagé à l'intérieur de l'embout cylindrique tubulaire femelle supplémentaire 52 pour raccorder le porte-outil 56 à la pièce intermédiaire tubulaire de raccordement 18. Celle-ci remplit ainsi une fonction de raccordement de l'outil 14 à son porte-outil 56.

Comme dans le mode de réalisation précédent, la gorge de verrouillage 24 creusée longitudinalement dans l'embout cylindrique mâle 12 de l'outil 14 coopère avec la bille de verrouillage 30, l'orifice traversant 28 creusé dans l'embout cylindrique tubulaire femelle 16 de la pièce intermédiaire tubulaire de raccordement 18 et la bague de verrouillage 36 disposée autour de l'embout cylindrique tubulaire femelle 16 de la pièce intermédiaire tubulaire de raccordement 18 en regard de l'orifice traversant 28, pour raccorder l'outil 14 à la pièce intermédiaire tubulaire de raccordement 18 et verrouiller ou déverrouiller ce raccordement comme détaillé précédemment.

En outre, une gorge de verrouillage supplémentaire 58 est creusée dans la face externe de l'embout cylindrique mâle supplémentaire 54 et coopère avec une bille de verrouillage supplémentaire 60, un orifice traversant supplémentaire 62 creusé dans l'embout cylindrique tubulaire femelle supplémentaire 52 de la pièce intermédiaire tubulaire de raccordement 18 et une bague de verrouillage supplémentaire 64 disposée autour de la pièce intermédiaire tubulaire de raccordement 18 en regard de l'orifice traversant supplémentaire 62, pour raccorder le porte-outil 56 à la pièce intermédiaire tubulaire de raccordement 18 et verrouiller ou déverrouiller ce raccordement, selon un principe similaire, quoique plus complexe, à celui détaillé précédemment.

La bague de verrouillage supplémentaire 64 présente les mêmes caractéristiques techniques que la bague de verrouillage 36. En d'autres termes, elle présente également une face interne dans laquelle un évidement de profondeur variable permet le blocage/déblocage de la bille de verrouillage supplémentaire 60 contre la gorge de verrouillage supplémentaire 58 en fonction de sa position. Plus précisément, elle est montée libre en rotation autour de la pièce intermédiaire tubulaire de raccordement 18 et la variabilité de profondeur de l'évidement permettant le blocage/déblocage de la bille de verrouillage supplémentaire 60 est orthoradiale.

Les deux bagues de verrouillage 36 et 64 sont par ailleurs immobilisées en translation le long de l'axe principal z du système de verrouillage 50. Cette immobilisation en translation peut être réalisée de multiples façons connues en soi. Dans le mode de réalisation concrètement illustré par la figure 3 mais non limitatif, elle est par exemple réalisée à l'aide d'un collet 66 formé à l'extrémité de la pièce intermédiaire tubulaire de raccordement 18 située du côté de l'outil 14, d'une bague 68 formant entretoise disposée entre les deux bagues de verrouillage 36 et 64, et d'un anneau élastique ou circlips 70 monté dans une gorge annulaire 72 creusée à proximité de l'extrémité de la pièce intermédiaire tubulaire de raccordement 18 située du côté du porte-outil 56.

La gorge de verrouillage supplémentaire 58 est de forme plus complexe que la gorge de verrouillage 24.

Elle présente un premier segment 58A s'étendant axialement, c'est-à-dire le long de l'axe principal z, depuis l'extrémité libre de l'embout cylindrique mâle supplémentaire 54 sur une certaine longueur LA. Ce premier segment 58A est destiné à prolonger la gorge de verrouillage 24, de longueur L, lorsque l'outil 14 et le porte-outil 56 sont engagés l'un contre l'autre dans la pièce intermédiaire tubulaire de raccordement 18. Il présente donc les mêmes caractéristiques de section.

Elle présente un deuxième segment 58B parallèle au premier, s'étendant axialement depuis l'extrémité libre de l'embout cylindrique mâle supplémentaire 54 sur une certaine longueur LB nettement supérieure à LA.

Elle présente un troisième segment 58C, partiellement annulaire et orthogonal aux deux premiers, reliant entre elles, d'une part, l'extrémité du premier segment 58A qui est opposée à l'extrémité libre de l'embout cylindrique mâle supplémentaire 54 et, d'autre part, une portion médiane du deuxième segment 58B.

Elle présente un quatrième segment 58D, partiellement annulaire, parallèle au troisième segment 58C et de même longueur que celui-ci. Une extrémité de ce quatrième segment 58D communique avec l'extrémité du deuxième segment 58B qui est opposée à l'extrémité libre de l'embout cylindrique mâle supplémentaire 54.

Enfin, elle présente un cinquième segment 58E parallèle aux deux premiers, s'étendant sur une certaine longueur LE depuis l'extrémité du quatrième segment 58D qui est opposée à celle communicant avec le deuxième segment 58B vers le premier segment 58A et dans le prolongement de celui-ci.

Pour que le cinquième segment 58E ne rejoigne pas tout à fait le premier segment 58A, il est nécessaire que la longueur LB vérifie la condition LB > LE + LA.

Par ailleurs, la longueur LE vérifie la relation LE = L + LA et une cavité supplémentaire 74 de forme partiellement sphérique, identique à la cavité 26, est creusée à l'extrémité du cinquième segment 58E qui est proche du premier segment 58A. Cette cavité 74 sert, comme la cavité 26 pour la bille de verrouillage 30, de butée de fin de course pour la bille de verrouillage supplémentaire 60. Enfin, la distance entre les cavités 26 et 74, lorsque l'outil 14 et le porte-outil 56 sont disposés l'un contre l'autre coaxialement le long de l'axe z par leurs embouts mâles respectifs 12, 54 et lorsque la gorge de verrouillage 24 est disposée en vis-à-vis du premier segment 58A de la gorge de verrouillage supplémentaire 58, est précisément égale à la distance entre les deux orifices traversants 28 et 62 percés dans la pièce intermédiaire tubulaire de raccordement 18, qui est elle-même précisément égale à LB - LA (i.e. La distance entre les troisième et quatrième segments 58C et 58D).

Ainsi, lorsque l'on engage le porte-outil 56 dans la pièce intermédiaire tubulaire de raccordement 18 le long de l'axe z, la bague de verrouillage supplémentaire 64 restant dans sa position de déblocage, le deuxième segment 58B (ou éventuellement le premier segment 58A, puis le troisième segment 58C, puis la portion du deuxième segment 58B s'étendant au-delà du troisième segment 58C dans l'embout cylindrique mâle supplémentaire 54) sert de guide angulaire grâce à la coopération de la gorge de verrouillage supplémentaire 58 avec la bille de verrouillage supplémentaire 60.

Compte tenu de la configuration détaillée précédemment, l'engagement précité de la bille de verrouillage supplémentaire 60 dans la gorge de verrouillage supplémentaire 58 entraîne également l'engagement de la bille de verrouillage 30 dans la gorge de verrouillage supplémentaire 58. Compte tenu en outre de la distance LB - LA entre les billes de verrouillage 30, 60 lorsqu'elles sont logées dans leurs orifices traversants respectifs 28, 62, la bille de verrouillage 30 atteint le troisième segment 58C lorsque la bille de verrouillage supplémentaire 60 atteint le quatrième segment 58D.

Dans cette position, en accompagnant une rotation de la pièce intermédiaire tubulaire de raccordement 18 autour de l'axe z dans le bon sens, on guide la bille de verrouillage supplémentaire 60 le long du quatrième segment 58D vers le cinquième segment 58E et la bille de verrouillage 30 le long du troisième segment 58C vers le premier segment 58A.

Enfin, à partir de cette nouvelle position, en accompagnant une translation de la pièce intermédiaire tubulaire de raccordement 18 le long de l'axe z dans le bon sens, on guide la bille de verrouillage supplémentaire 60 le long du cinquième segment 58E vers la cavité supplémentaire 74 et la bille de verrouillage 30 le long du premier segment 58A vers l'extérieur de l'embout cylindrique mâle supplémentaire 54 à la distance L de son extrémité (puisque LE = L + LA). Dans cette position finale, une rotation de la bague de verrouillage supplémentaire 64 autour de l'axe z vers sa position de blocage permet de verrouiller le raccordement de la pièce intermédiaire tubulaire de raccordement 18 au porte-outil 56. De façon optionnelle, il peut être prévu une profondeur suffisante des segments 58B, 58C et 58D, notamment plus importante que celle des segments 58A, 58E et de la gorge de verrouillage 24, pour que l'engagement des billes de verrouillage 30 et 60 dans ces segments 58B, 58C et 58D soit possible quelle que soit la position orthoradiale de la bague de verrouillage supplémentaire 64. Cela permet de faciliter la manipulation de raccordement.

Dans la position finale verrouillée de la pièce intermédiaire tubulaire de raccordement 18 autour de l'embout cylindrique mâle supplémentaire 54, on se retrouve dans une configuration similaire à celle de la figure 1 pour l'engagement de l'outil 14 dans l'ensemble constitué du porte-outil 56 et de la pièce intermédiaire tubulaire de raccordement 18. L'extrémité libre de l'embout cylindrique mâle supplémentaire 54 engagée dans la pièce intermédiaire tubulaire de raccordement 18 remplit alors la fonction de l'épaulement 34.

Il suffit donc d'engager l'embout cylindrique mâle 12 de l'outil 14 dans l'embout cylindrique tubulaire femelle 16 de la pièce intermédiaire tubulaire de raccordement 18 contre le porte-outil 56, en étant guidé par la coopération entre la gorge de verrouillage 24 et la bille de verrouillage 30 et en maintenant la bague de verrouillage 36 en position de déblocage, pour amener la bille de verrouillage 30 en regard de la cavité 26. Dans cette position, une rotation de la bague de verrouillage 36 autour de l'axe z vers sa position de blocage permet de verrouiller le raccordement de l'outil 14 à l'ensemble constitué de la pièce intermédiaire tubulaire de raccordement 18 et du porte-outil 56.

L'intérêt du mode de réalisation de la figure 3 apparaît surtout lorsque l'on souhaite libérer le porte-outil 56 de son outil 14 puisqu'il permet de procéder selon deux méthodes distinctes.

Selon une première méthode, l'outil est désengagé comme dans le mode de réalisation de la figure 1. Par rotation orthoradiale de la bague de verrouillage 36 vers sa position de déblocage, on libère l'outil 14 que l'on peut alors extraire de la pièce intermédiaire tubulaire de raccordement 18 par translation le long de l'axe z en l'éloignant du porte-outil 56.

Selon une seconde méthode, par rotation orthoradiale de la bague de verrouillage 36 vers sa position de déblocage, on libère l'outil 14 mais on le maintient en position dans la pièce intermédiaire tubulaire de raccordement 18. Puis par rotation orthoradiale de la bague de verrouillage suplémentaire 64 vers sa position de déblocage, on libère la pièce intermédiaire tubulaire de raccordement 18 le long de l'embout cylindrique mâle supplémentaire 54. Celle-ci peut alors être rétractée sur toute la longueur du cinquième segment 58E dans le porte-outil 56. Il suffit de prévoir une longueur LE suffisante pour qu'en position rétractée la pièce intermédiaire tubulaire de raccordement 18 ne dépasse pas de l'extrémité libre de l'embout cylindrique mâle supplémentaire 54. Il est alors possible de retirer l'outil 14 latéralement, sans aucune translation le long de l'axe z. Cette seconde méthode permet donc de désolidariser le porte-outil 56 et son outil 14 sans aucun éloignement axial relatif des deux pièces. Ceci est particulièrement avantageux dans des applications d'outils de précision dans lesquelles aucun espace axial n'est suffisant pour désengager l'outil de son porte-outil axialement.

Un autre intérêt du mode de réalisation de la figure 3 concerne certaines applications dans lesquelles les manipulations sont soumises à des règles d'hygiène strictes, puisque la pièce intermédiaire tubulaire de raccordement 18 peut être conçue comme une pièce jetable ou stérilisable indépendamment des deux autres.

On notera par ailleurs que la configuration particulière en segments reliés les uns aux autres du mode de réalisation de la figure 3, grâce à laquelle l'engagement des deux billes de verrouillage 30 et 60 du système de verrouillage peut être coordonné et grâce à laquelle également la pièce intermédiaire tubulaire de raccordement 18 peut être complètement rétractée dans l'embout cylindrique mâle supplémentaire 54 pour un retrait efficace de l'outil 14, est finalement indépendante du système de verrouillage choisi. En effet, il suffit qu'un élément de verrouillage (bille ou autre) du système de verrouillage puisse être guidé dans une gorge, pour que quel que soit le système de verrouillage choisi, cette configuration produise l'effet technique précédemment détaillé.

Il apparaît clairement qu'un système de verrouillage tel que l'un de ceux décrits précédemment permet un positionnement et un verrouillage aisés de deux éléments à raccorder lorsque ces deux éléments sont conçus sur le principe d'un embout mâle coopérant avec un embout femelle. L'opération de verrouillage est possible à l'aide de deux doigts d'une seule main. En outre, le déverrouillage et le désengagement des deux éléments sont également particulièrement simples à exécuter. Dans le cas du deuxième mode de réalisation détaillé précédemment et concernant le verrouillage/déverrouillage d'un outil sur son porte-outil, cette opération peut même être réalisée sans déplacement relatif axial du porte-outil et de l'outil.

On notera que tous types de matériaux, métalliques, plastiques ou autres, peuvent être envisagés, en fonction des applications visées et des contextes concernés, pour fabriquer les différents éléments décrits précédemment.

On notera par ailleurs que l'invention n'est pas limitée aux modes de réalisation décrits précédemment.

En particulier, plusieurs orifices traversants et plusieurs éléments mobiles de verrouillage peuvent être répartis angulairement autour de l'embout cylindrique tubulaire femelle concerné.

En particulier également, la ou les gorges de verrouillage peuvent prendre, en conformité avec les revendications, des formes variées selon le guidage souhaité pour effectuer le raccordement avant verrouillage.

Il apparaîtra plus généralement à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Système de verrouillage (10) comportant un embout cylindrique mâle (12) d'un premier élément (14) et un embout cylindrique tubulaire femelle (16) d'un deuxième élément (18), l'embout cylindrique mâle (12) étant destiné à être engagé à l'intérieur de l'embout cylindrique tubulaire femelle (16) pour raccorder le premier élément (14) au deuxième élément (18), dans lequel :
- une gorge de verrouillage (24) est creusée dans la face externe (20) de l'embout cylindrique mâle (12),
- l'embout cylindrique tubulaire femelle (16) est percé latéralement d'un orifice traversant (28) à l'intérieur duquel est disposé un élément mobile de verrouillage (30) apte à faire saillie à l'intérieur de l'embout cylindrique tubulaire femelle (16) dans la gorge de verrouillage (24) de l'embout cylindrique mâle (12), et
- une bague de verrouillage (36) est montée, libre en rotation (L, U) autour de l'embout cylindrique tubulaire femelle (16), sur la face externe (38) de l'embout cylindrique tubulaire femelle (16) en regard de l'orifice traversant (28), cette bague (36) présentant une face interne (40) dans laquelle un évidement (42) de profondeur variable orthoradialement permet le blocage/déblocage de l'élément mobile de verrouillage (30) contre la gorge de verrouillage (24) en fonction de la position de la bague (36),
**caractérisé en ce que** :
- l'évidement (42) présente une profondeur maximale telle que, lorsque cette profondeur maximale est disposée en regard de l'orifice traversant (28), l'élément mobile de verrouillage (30) fait malgré tout saillie à l'intérieur de l'embout cylindrique tubulaire femelle (16), et
- la gorge de verrouillage (24) s'étend dans la direction axiale (z) de l'embout cylindrique mâle (12) depuis une extrémité libre de celui-ci, pour accompagner et contraindre angulairement l'engagement de l'embout cylindrique mâle (12) dans l'embout cylindrique tubulaire femelle (16) en coopération avec l'élément mobile de verrouillage (30).

2. Système de verrouillage (10) selon la revendication 1, dans lequel l'évidement (42) de profondeur variable en face interne (40) de la bague de verrouillage (36) est creusé dans un secteur angulaire orthoradial, entre une première extrémité angulaire (46) de profondeur maximale et une seconde extrémité angulaire (48) de profondeur minimale, la profondeur diminuant progressivement de ladite première extrémité angulaire (46) à ladite seconde extrémité angulaire (48).

3. Système de verrouillage (10) selon la revendication 1 ou 2, dans lequel la gorge de verrouillage (24) présente, à son extrémité située à l'opposé de l'extrémité libre de l'embout cylindrique mâle (12), une cavité (26) de plus grande profondeur creusée également dans la face externe (20) de l'embout cylindrique mâle (12).

4. Système de verrouillage (10) selon l'une quelconque des revendications 1 à 3, dans lequel l'élément mobile de verrouillage (30) est une bille.

5. Système de verrouillage (10) selon l'une quelconque des revendications 1 à 4, dans lequel l'orifice traversant (28) présente une réduction de diamètre (32), du côté de la face interne (22) de l'embout cylindrique tubulaire femelle (16), limitant la saillie de l'élément mobile de verrouillage (30) à l'intérieur de l'embout cylindrique tubulaire femelle (16).

6. Système de verrouillage (10) selon l'une quelconque des revendications 1 à 5, comportant un embout cylindrique tubulaire femelle supplémentaire (52) du deuxième élément (18) et un embout cylindrique mâle supplémentaire (54) d'un troisième élément (56), le deuxième élément (18) formant ainsi une pièce intermédiaire de raccordement du premier élément (14) au troisième élément (56), dans lequel :
- une gorge de verrouillage supplémentaire (58) est creusée dans la face externe de l'embout cylindrique mâle supplémentaire (54) du troisième élément (56),
- l'embout cylindrique tubulaire femelle supplémentaire (52) est percé latéralement d'un orifice traversant supplémentaire (62) à l'intérieur duquel est disposé un élément mobile de verrouillage supplémentaire (60) apte à faire saillie à l'intérieur de l'embout cylindrique tubulaire femelle supplémentaire (52) dans la gorge de verrouillage supplémentaire (58), et
- une bague de verrouillage supplémentaire (64) est montée libre en rotation autour de l'embout cylindrique tubulaire femelle supplémentaire (52) en regard de l'orifice traversant supplémentaire (62), cette bague de verrouillage supplémentaire (64) présentant une face interne dans laquelle un évidement de profondeur variable orthoradialement permet le blocage/déblocage de l'élément mobile de verrouillage supplémentaire (60) contre la gorge de verrouillage supplémentaire (58) en fonction de la position angulaire de la bague de verrouillage supplémentaire (58) autour de son axe de rotation.

7. Système de verrouillage (10) selon la revendication 6, dans lequel la gorge de verrouillage supplémentaire (58) comporte au moins un segment (58A, 58B) s'étendant dans la direction axiale (z) de l'embout cylindrique mâle supplémentaire (54) depuis une extrémité libre de celui-ci, pour accompagner et contraindre angulairement l'engagement de l'embout cylindrique mâle supplémentaire (54) dans l'embout cylindrique tubulaire femelle supplémentaire (52), jusqu'à une position de rétractation complète du deuxième élément (18) dans le troisième élément (56) dans laquelle l'embout cylindrique tubulaire femelle (16) du deuxième élément (18) ne dépasse pas de l'extrémité libre de l'embout cylindrique mâle supplémentaire (54) du troisième élément (56).

8. Système de verrouillage (10) selon la revendication 7, dans lequel la gorge de verrouillage supplémentaire (58) comporte :
- un premier segment (58A) s'étendant dans la direction axiale (z) de l'embout cylindrique mâle supplémentaire (54) depuis une extrémité libre de celui-ci, destiné à prolonger la gorge de verrouillage (24) de l'embout cylindrique mâle (12) du premier élément (14),
- un deuxième segment (58B) parallèle au premier, s'étendant axialement depuis l'extrémité libre de l'embout cylindrique mâle supplémentaire (54) sur une longueur supérieure à celle du premier segment (58A),
- un troisième segment (58C), partiellement annulaire et orthogonal aux deux premiers, reliant entre elles, d'une part, l'extrémité du premier segment (58A) qui est opposée à l'extrémité libre de l'embout cylindrique mâle supplémentaire (54) et, d'autre part, une portion médiane du deuxième segment (58B),
- un quatrième segment (58D), partiellement annulaire, parallèle au troisième segment (58C) et de même longueur que celui-ci, une extrémité de ce quatrième segment (58D) communiquant avec l'extrémité du deuxième segment (58B) qui est opposée à l'extrémité libre de l'embout cylindrique mâle supplémentaire (54), et
- un cinquième segment (58E) parallèle aux deux premiers, s'étendant sur une certaine longueur depuis l'extrémité du quatrième segment (58D) qui est opposée à celle communicant avec le deuxième segment (58B) vers le premier segment (58A) et dans le prolongement de celui-ci ; et
dans lequel la distance entre les troisième (58C) et quatrième (58D) segments est égale à la distance entre l'orifice traversant (28) et l'orifice traversant supplémentaire (62).

9. Système de verrouillage (10) selon la revendication 8, dans lequel le cinquième segment (58E) présente, à son extrémité située à l'opposé de celle communiquant avec le quatrième segment (58D), une cavité (74) de plus grande profondeur creusée dans la face externe de l'embout cylindrique mâle supplémentaire (54), et dans lequel la longueur du cinquième segment (58E) est égale à la somme de la longueur du premier segment (58A) et de la longueur de la gorge de verrouillage (24) de l'embout cylindrique mâle (12) du premier élément (14).

## Patentansprüche

1. Verriegelungssystem (10), das einen zylindrischen Steckansatz (12) eines ersten Elements (14) und einen zylindrischen röhrenförmigen Buchsenansatz (16) eines zweiten Elements (18) umfasst, wobei der zylindrische Steckansatz (12) dazu bestimmt ist, in das Innere des zylindrischen röhrenförmigen Buchsenansatzes (16) eingefügt zu werden, um das erste Element (14) an das zweite Element (18) anzuschließen, wobei:
- eine Verriegelungsnut (24) in die Außenseite (20) des zylindrischen Steckansatzes (12) gehöhlt wird,
- der zylindrische röhrenförmige Buchsenansatz (16) seitlich mit einer durchgehenden Öffnung (28) durchbohrt wird, in deren Innerem ein bewegliches Verriegelungselement (30) angeordnet ist, das geeignet ist, um in das Innere des zylindrischen röhrenförmigen Buchsenansatzes (16) in der Verriegelungsnut (24) des zylindrischen Steckansatzes (12) vorzuragen, und
- einen Verriegelungsring (36), frei in Drehung (L, U) um den zylindrischen röhrenförmigen Buchsenansatz (16) auf der Außenseite (38) des zylindrischen röhrenförmigen Buchsenansatzes (16), der durchgehenden Öffnung (28) gegenüber montiert ist, wobei dieser Ring (36) eine Innenfläche (40) aufweist, in der eine Aussparung (42) mit orthoradial variabler Tiefe das Blockieren/Lösen des beweglichen Verriegelungselements (30) gegen die Verriegelungsnut (24) in Abhängigkeit von der Position des Rings (36) erlaubt,
**dadurch gekennzeichnet, dass**:
- die Aussparung (42) eine maximale Tiefe derart aufweist, dass, wenn diese maximale Tiefe gegenüber der durchgehenden Öffnung (28) angeordnet ist, das bewegliche Verriegelungselement (30) trotz allem in das Innere des zylindrischen röhrenförmigen Buchsenansatzes (16) vorragt, und
- die Verriegelungsnut (24) sich in die axiale Richtung (z) des zylindrischen Steckansatzes (12) von einem freien Ende dieses erstreckt, um das Eingreifen des zylindrischen Steckansatzes (12) in den zylindrischen röhrenförmigen Buchsenansatz (16) unter Zusammenwirken mit dem beweglichen Verriegelungselement (30) zu begleiten und winkelig zu spannen.

2. Verriegelungssystem (10) nach Anspruch 1, wobei die Aussparung (42) mit variabler Tiefe auf der Innenfläche (40) des Verriegelungsrings (36) in einen orthoradialen Winkelsektor, zwischen einem ersten Winkelende (46) mit maximaler Tiefe und einem zweiten Winkelende (48) mit minimaler Tiefe, gehöhlt wird, wobei die Tiefe allmählich von dem ersten Winkelende (46) zu dem zweiten Winkelende (48) abnimmt.

3. Verriegelungssystem (10) nach Anspruch 1 oder 2, wobei die Verriegelungsnut (24) an ihrem Ende, das dem freien Ende des zylindrischen Steckansatzes (12) entgegengesetzt ist, einen Hohlraum (26) mit größerer Tiefe aufweist, der ebenfalls in die Außenseite (20) des zylindrischen Steckansatzes (12) gehöhlt ist.

4. Verriegelungssystem (10) nach einem der Ansprüche 1 bis 3, wobei das bewegliche Verriegelungselement (30) eine Kugel ist.

5. Verriegelungssystem (10) nach einem der Ansprüche 1 bis 4, wobei die durchgehende Öffnung (28) eine Durchmesserreduzierung (32) auf der Seite der Innenfläche (22) des zylindrischen röhrenförmigen Buchsenansatzes (16) aufweist, die das Vorragen des beweglichen Verriegelungselements (30) in das Innere des zylindrischen röhrenförmigen Buchsenansatzes (16) einschränkt.

6. Verriegelungssystem (10) nach einem der Ansprüche 1 bis 5, das einen zusätzlichen zylindrischen röhrenförmigen Buchsenansatz (52) des zweiten Elements (18) und einen zusätzlichen Steckansatz (54) eines dritten Elements (56) umfasst, wobei das zweite Element (18) daher ein Anschlusszwischenteil des ersten Elements (14) an dem dritten Element (56) bildet, wobei:
- eine zusätzliche Verriegelungsnut (58) in die Außenfläche des zusätzlichen zylindrischen Steckansatzes (54) des dritten Elements (56) gehöhlt ist,
- der zusätzliche zylindrische röhrenförmige Buchsenansatz (52) seitlich mit einer zusätzlichen durchgehenden Öffnung (62) durchbohrt ist, in deren Innerem ein zusätzliches bewegliches Verriegelungselement (60) angeordnet ist, das geeignet ist, um in das Innere des zusätzlichen zylindrischen röhrenförmigen Buchsenansatzes (52) in die zusätzliche Verriegelungsnut (58) vorzuragen, und
- ein zusätzlicher Verriegelungsring (64) frei in Drehung um den zusätzlichen zylindrischen röhrenförmigen Buchsenansatz (52) gegenüber der zusätzlichen durchgehenden Öffnung (62) montiert ist, wobei dieser zusätzliche Verriegelungsring (64) eine Innenfläche aufweist, in der eine Aussparung mit orthoradial variabler Tiefe das Blockieren/Lösen des zusätzlichen beweglichen Verriegelungselements (60) gegen die zusätzliche Verriegelungsnut (58) in Abhängigkeit von der Winkelposition des zusätzlichen Verriegelungsrings (58) um seine Rotationsachse erlaubt.

7. Verriegelungssystem (10) nach Anspruch 6, wobei die zusätzliche Verriegelungsnut (58) mindestens ein Segment (58A, 58B) umfasst, das sich in die axiale Richtung (z) des zusätzlichen zylindrischen Steckansatzes (54) von einem freien Ende dieses erstreckt, um das Eingreifen des zusätzlichen zylindrischen Steckansatzes (54) in den zusätzlichen zylindrischen röhrenförmigen Buchsenansatz (52) bis zu einer vollständigen Einfahrposition des zweiten Elements (18) in das dritte Element (56), in die der zylindrische röhrenförmige Buchsenansatz (16) des zweiten Elements (18) nicht von dem freien Ende des zusätzlichen zylindrischen Steckansatzes (54) des dritten Elements (56) vorragt, zu begleiten und winkelig zu spannen.

8. Verriegelungssystem (10) nach Anspruch 7, wobei die zusätzliche Verriegelungsnut (58) Folgendes umfasst:
- ein erstes Segment (58A), das sich in die axiale Richtung (z) des zusätzlichen zylindrischen Steckansatzes (54) von einem freien Ende dieses erstreckt, dazu bestimmt, die Verriegelungsnut (24) des zylindrischen Steckansatzes (12) des ersten Elements (14) zu verlängern,
- ein zweites Segment (58B) parallel zu dem ersten, das sich axial von dem freien Ende des zusätzlichen zylindrischen Steckansatzes (54) auf einer Länge erstreckt, die größer ist als die des ersten Segments (58A),
- ein drittes Segment (58C), das teilweise ringförmig und zu den zwei ersten orthogonal ist, das einerseits das Ende des ersten Segments (58A), das dem freien Ende des zusätzlichen zylindrischen Steckansatzes (54) entgegengesetzt ist, und, andererseits, einen Mittenabschnitt des zweiten Segments (58B) miteinander verbindet,
- ein viertes Segment (58D), das teilweise ringförmig ist, parallel zu dem dritten Segment (58C) und mit derselben Länge wie dieses, wobei ein Ende dieses vierten Segments (58D) mit dem Ende des zweiten Segments (58B), das dem freien Ende des zusätzlichen zylindrischen Steckansatzes (54) entgegengesetzt ist, kommuniziert, und
- ein fünftes Segment (58E) parallel zu den zwei ersten, das sich auf einer bestimmten Länge ausgehend von dem Ende des vierten Segments (58D), das dem entgegengesetzt ist, das mit dem zweiten Segment (58B) kommuniziert, zu dem ersten Segment (58A) und in der Verlängerung dieses erstreckt; und
wobei der Abstand zwischen dem dritten (58C) und dem vierten (58D) Segment gleich dem Abstand zwischen der durchgehenden Öffnung (28) und der zusätzlichen durchgehenden Öffnung (62) ist.

9. Verriegelungssystem (10) nach Anspruch 8, wobei das fünfte Segment (58E), auf seinem Ende, das dem, das mit dem vierten Segment (58D) kommuniziert, entgegengesetzt ist, einen Hohlraum (74) mit größerer Tiefe aufweist, der in die Außenfläche des zusätzlichen zylindrischen Steckansatzes (54) gehöhlt ist, und wobei die Länge des fünften Segments (58E) gleich der Summe der Länge des ersten Segments (58A) und der Länge der Verriegelungsnut (24) des zylindrischen Steckansatzes (12) des ersten Elements (14) ist.

## Claims

1. Locking system (10) comprising a male cylindrical end (12) of a first element (14) and a female tubular cylindrical end (16) of a second element (18), the male cylindrical end (12) being intended to be engaged inside the female tubular cylindrical end (16) to couple the first element (14) to the second element (18), wherein:
- a locking groove (24) is hollowed in the outer surface (20) of the male cylindrical end (12),
- the female tubular cylindrical end (16) is bored on the side with a through-opening (28) inside of which is arranged a mobile locking element (30) able to protrude inside the female tubular cylindrical end (16) in the locking groove (24) of the male cylindrical end (12), and
- a locking ring (36) is mounted, free in rotation (L, U) around the female tubular cylindrical end (16), on the outer surface (38) of the female tubular cylindrical end (16) opposite the through-opening (28), this ring (36) having an inner surface (40) wherein a recess (42) having an ortho-radially variable depth enables the locking/unlocking of the mobile locking element (30) against the locking groove (24) depending on the position of the ring (36),
**characterized in that**:
- the recess (42) has a maximum depth such that, when this maximum depth is arranged opposite the through-opening (28), the mobile locking element (30) despite this protrudes inside the female tubular cylindrical end (16), and
- the locking groove (24) extends in the axial direction (z) of the male cylindrical end (12) from a free end thereof, in order to guide and angularly limit the insertion of the male cylindrical end (12) in the female tubular cylindrical end (16) in cooperation with the mobile locking element (30).

2. Locking system (10) according to claim 1, wherein the recess (42) with variable depth on the inner surface (40) of the locking ring (36) is hollowed in an ortho-radial angular sector, between a first angular end (46) of maximum depth and a second angular end (48) of minimum depth, the depth decreasing progressively from said first angular end (46) to said second angular end (48).

3. Locking system (10) according to claim 1 or 2, wherein the locking groove (24) has, at its end located opposite the free end of the male cylindrical end (12), a cavity (26) of greater depth also hollowed in the outer surface (20) of the male cylindrical end (12).

4. Locking system (10) according to any of claims 1 to 3, wherein the mobile locking element (30) is a ball.

5. Locking system (10) according to any of claims 1 to 4, wherein the through-opening (28) has a reduction in diameter (32), on the side of the inner surface (22) of the female tubular cylindrical end (16), limiting the protruding of the mobile locking element (30) inside the female tubular cylindrical end (16).

6. Locking system (10) according to any of claims 1 to 5, comprising an additional female tubular cylindrical end (52) of the second element (18) and an additional male cylindrical end (54) of a third element (56), the second element (18) forming as such an intermediary part for coupling the first element (14) to the third element (56), wherein:
- an additional locking groove (58) is hollowed in the outer surface of the additional male cylindrical end (54) of the third element (56),
- the additional female tubular cylindrical end (52) is bored on the side with an additional through-opening (62) inside of which is arranged an additional mobile locking element (60) able to protrude inside the additional female tubular cylindrical end (52) in the additional locking groove (58), and
- an additional locking ring (64) is mounted to rotate freely around the additional female tubular cylindrical end (52) opposite the additional through-opening (62), this additional locking ring (64) having an inner surface wherein a recess having an ortho-radially variable depth enables the locking/unlocking of the additional mobile locking element (60) against the additional locking groove (58) according to the angular position of the additional locking ring (58) about its axis of rotation.

7. Locking system (10) according to claim 6, wherein the additional locking groove (58) comprises at least one segment (58A, 58B) extending in the axial direction (z) of the additional male cylindrical end (54) from a free end thereof, in order to guide and angularly limit the insertion of the additional male cylindrical end (54) in the additional female tubular cylindrical end (52), to a position of complete retraction of the second element (18) in the third element (56) wherein the female tubular cylindrical end (16) of the second element (18) does not exceed the free end of the additional male cylindrical end (54) of the third element (56).

8. Locking system (10) according to claim 7, wherein the additional locking groove (58) comprises:
- a first segment (58A) extending in the axial direction (z) of the additional male cylindrical end (54) from a free end thereof, intended to extend the locking groove (24) of the male cylindrical end (12) of the first element (14),
- a second segment (58B) parallel to the first, extending axially from the free end of the additional male cylindrical end (54) over a length that is greater than that of the first segment (58A),
- a third segment (58C), partially annular and orthogonal to the first two, connecting together, on the one hand, the end of the first segment (58A) which is opposite the free end of the additional male cylindrical end (54) and, on the other hand, a median portion of the second segment (58B),
- a fourth segment (58D), partially annular, parallel to the third segment (58C) and of the same length as the latter, one end of this fourth segment (58D) communicating with the end of the second segment (58B) which is opposite the free end of the additional male cylindrical end (54), and
- a fifth segment (58E) parallel to the first two, extending over a certain length from the end of the fourth segment (58D) which is opposite that communicating with the second segment (58B) to the first segment (58A) and in the extension of the latter; and
wherein the distance between the third (58C) and fourth (58D) segments is equal to the distance between the through-opening (28) and the additional through-opening (62).

9. Locking system (10) according to claim 8, wherein the fifth segment (58E) has, at its end located opposite that communicating with the fourth segment (58D), a cavity (74) of greater depth hollowed in the outer surface of the additional male cylindrical end (54), and wherein the length of the fifth segment (58E) is equal to the sum of the length of the first segment (58A) and of the length of the locking groove (24) of the male cylindrical end (12) of the first element (14).
